# EUROPEAN PATENT APPLICATION

(11) **EP 4 382 195 A1**
(43) Date of publication of application: **12.06.2024**
(21) Application number: 22211778.0
(22) Date of filing: 06.12.2022
(51) Int. Cl.: B01D 61/28, B01D 61/32, B01D 63/08

(54) **MEMBRANE DIALYSIS DEVICE**

(71) Applicant: AT & S Austria Technologie & Systemtechnik Aktiengesellschaft, 8700 Leoben-Hinterberg (AT)
(72) Inventor: Ebinger, Christoph, 70599 Stuttgart (DE); Gross, Friedrich, 8700 Leoben (AT); Kern, Konstantin, 8700 Leoben (AT); Oberhammer, Manuel, 8700 Leoben (AT); Moitzi, Heinz, 8740 Zeltweg (AT); Klocek, Jolanta, 8712 Niklasdorf (AT); Zanker, Andreas, 8753 Fohnsdorf (AT); Dragoi, Andreas, 8600 Bruck an der Mur (AT); Trinkl, Florian, 8700 Leoben (AT); Niederhammer, Siegfried, 8792 St. Peter-Freienstein (AT); Kontrus, Emma, 8020 Graz (AT)
(74) Representative: Dilg, Haeusler, Schindelmann Patentanwaltsgesellschaft mbH

(57) **Abstract**

There is described a membrane dialysis device (100), comprising:
i) a first dialysis section (110) having:
ia) a first dialysis medium region (112),
ib) a first diffusion medium region (113), and
ic) a first membrane section (111) arranged between the first dialysis medium region (112) and the first diffusion medium region (113);

ii) a second dialysis section (120) having:
iia) a second dialysis medium region (122),
iib) a second diffusion medium region (123), and
iic) a second membrane section (121) arranged between the first dialysis medium region (122) and the second diffusion medium region (123); and
iii) a separation device (140) that spatially separates the first dialysis section (110) from the second dialysis section (120).

The first dialysis medium region (112) is hereby fluidically coupled with the second dialysis medium region (122), so that dialysis medium (101) is streamed through the first dialysis medium region (112) and then through second dialysis medium region (122).

## Description

### Field of the Invention

The invention relates to a membrane dialysis device with at least two dialysis sections that are separated by a separation device. Further, the invention relates to a method of processing a dialysis medium, in particular a waste fluid from the component carrier manufacture. Additionally, the invention relates to a specific use of separation plates in membrane dialysis.

Thus, the invention may relate to the technical field of (acid) membrane dialysis, for example to process a component carrier (such as printed circuit boards and IC substrates) manufacture wastewater.

### Technical Background

For various industrial applications, it may be necessary to separate acids or alkalis from wastewater in order to be able to recover them or to improve wastewater treatment. This may be advantageous for separation of acid from wastewater, which often contains valuable metals like copper ions. A very effective method in this case may be membrane dialysis, whereby acid may be removed, while the valuable metals may remain in the wastewater. Membrane dialysis is a known process that can be applied for this purpose.

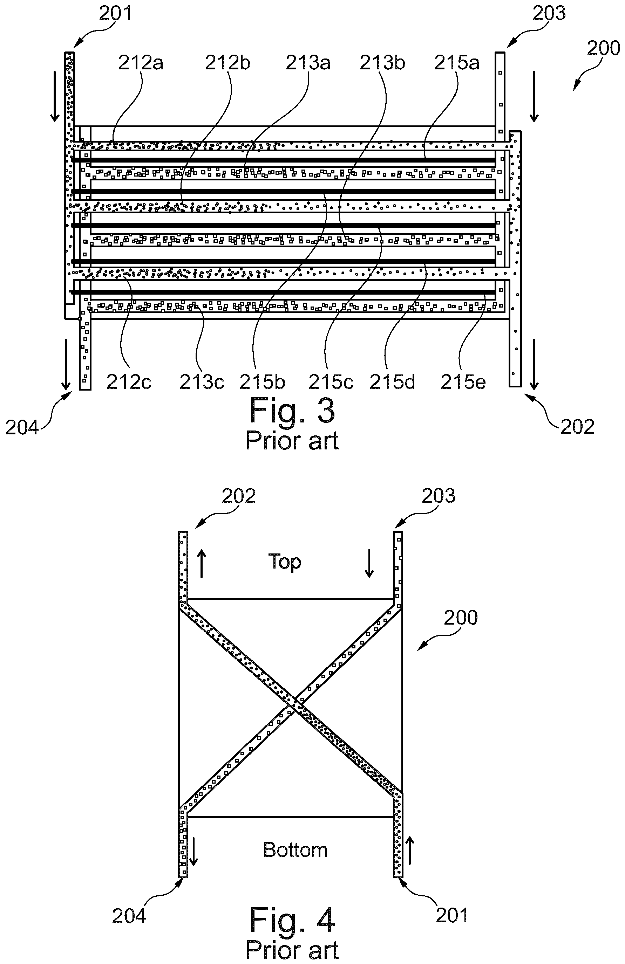

**Figure 3** shows a conventional example of a membrane dialysis apparatus 200. A wastewater 201 that comprises a high concentration of acid is streamed into the apparatus 200 at a first side, wherein it is divided into three parallel (or more) streams, the dialysis regions 212a-c. At a second side of the apparatus 200, water is input 203 as a diffusion medium, and divided into three further parallel streams, which are denoted diffusion regions 213a-c. Each of the three dialysis regions 212a-c is separated from the adjacent diffusion regions 213a-c, respectively, by a membrane 215a-e.

In other words, the process medium 201 streams are separated from the purified water 203 streams by an ion-selective membrane 215. The concentration gradient over the membrane ensures that all components diffuse into the water purified 203 streams. Hereby, the membranes 215 can be configured to allow only acidic ions and/or (alkali) metal ions to pass through and are thereby separated into the water 203 streams. As a result, the process medium 201 can be depleted of acid and alkali metals, while e.g. the concentration of heavy metals can be kept stable.

However, the application of membrane dialysis may still comprise, among others, the following drawbacks.
- gas formation: in an example, the formation of gas bubbles can be observed, for example within about 24 h after the start of the process. This phenomenon can significantly reduce the active surface area of the dialysis membranes. To remove the gas from the liquid, the process must then be stopped for e.g. about 30 minutes. This prevents the continuity of the process and may reduce its efficiency in an example to about 80-90 %.

Gas may form due to a change of solubility of CO₂ when the pH changes due to the dialysis process. The higher the concentration of the acid, the more gas may be formed. In an especially challenging example, the process had to be stopped after four hours due to the gas bubbles. Thereby, efficiency may be reduced to around 25%.
- membrane area: the active area of the membrane may still be considered as small and thus not as efficient as possible.
- stability and/or sealing: in particular during long term operation, stability and sealing may not be guaranteed, whereby the efficiency is hampered.

### Summary of the Invention

There may be a need to provide an efficient and robust membrane dialysis, in particular for acid-/metal-enriched wastewaters.

A membrane dialysis device, a method of processing a dialysis medium, and a use are described.

According to a first aspect of the invention, there is described a membrane dialysis device, comprising:
i) a first dialysis section having:
   ia) a first dialysis medium region (e.g. a first dialysis medium flow path),
   ib) a first diffusion medium region, and
   ic) a first membrane section (a membrane or a part of a membrane) arranged between the first dialysis medium region and the first diffusion medium region;
ii) a second dialysis section having:
   iia) a second dialysis medium region,
   iib) a second diffusion medium region, and
   iic) a second membrane section arranged between the first dialysis medium region and the second diffusion medium region; and
   iii) a separation device (e.g. a plate) that spatially separates the first dialysis section from the second dialysis section.
   The first dialysis medium region is hereby fluidically coupled with the second dialysis medium region, so that (in operation) dialysis medium is streamed through the first dialysis medium region and then through second dialysis medium region (i.e. the dialysis sections are arranged in a row).

According to a second aspect of the invention, there is described a method of processing a dialysis medium, in particular a waste fluid from the component carrier manufacture, the method comprising:
i) streaming, in a first dialysis section, a dialysis medium through a first dialysis medium region, that is separated with a first membrane section from a first diffusion medium region; and afterwards,
ii) streaming, in a spatially separated second dialysis section, the dialysis medium through a second dialysis medium region, being fluidically connected with the first dialysis region, wherein the second dialysis medium region is separated with a second membrane section from a second diffusion medium region.

According to a third aspect of the invention, there is described a use (method of using) of separation plates (separation devices) between membrane-containing sections of a membrane dialysis device, in particular with six or more membranes, to enable a turbulent flow of a (acid- and metal-containing) dialysis medium through the membrane dialysis device.

According to a further aspect of the present invention, a process control device for regulating the above described method and/or the above described device is discussed. The process control device comprises:
i) a database for capturing at least one process parameter (and an actual value, respectively), in particular a plurality of process parameters, from the running process,
ii) a data model unit which is adapted for storing at least one predetermined process parameter (and a target value, respectively), in particular a plurality of predetermined process parameters, and iii) a calculation device which is adapted for
   a) comparing the captured process parameter with the predetermined process parameter (and the pluralities with each other, respectively),
   b) determining a control operation which is based on the result of the comparison (for example actively compensating a difference between the actual value and the target value), and c) performing the predetermined control operation (e.g. adapt a flow rate, etc.).

According to a further aspect of the present invention, a computer program product for controlling a method for manufacturing component carriers is described, which computer program product, when it is executed by one or more processors (and one or more computers, respectively), controls the method (as described above) and/or the device (as described above) and/or the process control device (as described above).

In the context of this document, the term "acid- and metal-containing medium" may in particular denote any (liquid) medium which comprises acid and a metal (salt). Examples for such a metal may encompass: copper, nickel, gold, silver, cobalt, cadmium, magnesium, sodium, palladium, tin. Examples for acids may encompass: sulfuric acid, hydrochloric acid, nitrous acid, phosphoric acid. A metal salt is a chemical compound between a metal and an acid, wherein the metal salt is correspondingly present e.g. as sulfate, chloride, nitrate, or phosphate. Correspondingly, a metal salt may be copper sulfate or copper chloride, for example. This may be present in the acid- and metal-containing medium as metal ion and salt ion. An acid- and metal-containing medium, besides metal salt, may comprise a solution which may be aqueous or acidic, for example, in which the metal salt is dissolved. For example, besides water, the medium may also comprise hydrochloric acid and/or sulfuric acid or an organic solvent.

In an example, the acid- and metal-containing medium origins from the manufacture of circuit boards and/or substrates and may comprise corresponding residues. Furthermore, the acid- and metal-containing medium may be processed, such that substantially only the metal (salt) is present. In an example, the acid- and metal-containing medium is (substantially) free from (undesired) foreign metal (such as iron). In a further example, the acid- and metal-containing medium comprises (residues of) foreign metal.

In the context of this document, the term "dialysis" may in particular denote that a concentration-driven membrane process is used to remove molecules (in particular ions) from solutions. Alternatively, a (partially) pressure -driven membrane process may be used to remove molecules. In an embodiment, a dialysis medium is provided via a first feed (dialysis input) at a first side of the membrane, and via a second feed (diffusion input), a further medium (e.g. water) is provided at the second (opposing the first) side of the membrane. The membrane may be semipermeable and enables anions (e.g. chloride) to pass (anion-membrane), while cations (e.g. Cu²⁺) are not enabled to pass. Thus, cations, in particular metal-cations, may be enriched in the dialysate medium, while anions (e.g. chloride anions) are enriched in the diffusate medium. Due to charge compensation, H⁺ ions (protons) are generated in the diffusate. The combination of both processes results in lowering the pH value, so that the diffusate becomes highly acidic. Accordingly, the term "acid dialysis" may be used for the dialysis process.

In the context of the present document, the term "membrane" may in particular refer to a thin layer structure that is configured as a selective barrier. For the membrane dialyses, which are described in the following, respectively the same membrane may be utilized or (preferably) different membranes are used. The term "membrane section" may in particular refer to a part of a membrane or a full membrane. For example, a membrane section may be configured as a plate membrane. In another example, the membrane section may be configured as a part of a hollow membrane. This is, because one and the same hollow membrane may be applied to separate several dialysis medium regions and diffusion medium regions in different dialysis sections. Thus, each dialysis section may comprise a membrane section from one and the same membrane.

Besides a plate membrane and a hollow membrane, the membrane section may comprise for example one of a dry membrane, a wet membrane, a spiral membrane (a spiral membrane may be in particular a wet membrane rolled around a distribution core), a mesh-free membrane, a membrane with functionalized group, a cationic-selective membrane, an anionic-selective membrane, an anion exchange membrane.

An anion-membrane may be functionalized e.g. with bromine (Br⁻), wherein the carrier material may be PET or PVC, for example. In certain cases, the metal salt-containing solution may include hydrogen peroxide (H₂O₂). In this case, preferably an oxidation-resistant membrane may be used, which is based e.g. on PEEK (polyetheretherketone).

In the context of the present document, the term "dialysis medium region" may refer to a region that is configured to enable a dialysis medium to stream/flow through. In an example, the dialysis medium region may be configured as a channel through which an acid- and metal-containing medium is streamed. In another example, the dialysis medium region may be configured as a plate through which the acid- and metal-containing medium is streamed.

In the context of the present document, the term "diffusion medium region" may refer to a region that is configured so that a diffusion medium can be streamed through. In an example, the diffusion medium region may be configured as a channel through which purified water or diffusion medium is streamed. In another example, the diffusion medium region may be configured as a plate through which purified water or the diffusion medium is streamed.

In the context of the present document, the term "separation device" may in particular refer to a device that is suitable to separate a dialysis section from a further dialysis section. In a basic embodiment, the separation device is configured as a plate between two dialysis sections, in particular oriented in parallel with the membrane sections of said dialysis sections. In a further embodiment, the separation device may be configured to (hermetically) seal one dialysis section from the other dialysis section, in particular in a fluid-tight manner. Thereby, the sealing of the membrane dialysis device may be highly improved. Further, the separation device may be configured to increase the stability of the membrane dialysis device. Thereby, a high number of dialysis sections may be applied, for example six or more. In an embodiment, the separation device may comprise a plastic, a ceramic, or a metal material.
In a specific example, a separation device is configured as a rigid baffle (e.g., resistant plastic). Thickness can be for example in the range about 5 to 10 mm.

In the context of this document, the term "process control device" may in particular denote each device (or plurality of devices) which are suitable for performing a process control, wherein the process (at least partially) concerns a circuit board and/or substrate manufacture. In particular, the process control device is adapted to (at least partially) control and regulate, respectively, a valuable material cycle, wherein residues of the production are fed back such that substantially no (heavy metal and/or acid) wastes occur. For this purpose, the process control device in particular may comprise a database (unit) and a data model unit, wherein the former stores captured processed data, while the latter stores intended desired process data. The process control device may be coupled with a multiplicity of sensors and measuring devices, to determine actual parameters at different process stations in this manner. Furthermore, the process control device may comprise a calculation device which compares the captured parameters with the desired ones and, based thereon, determines and performs a control operation. In a preferred embodiment, the process control device comprises a self-learning algorithm (AI) by which controlling and regulating, respectively, of the process can be continuously improved.

In particular, the flow rate can be adjusted depending on the composition of the feed medium.

In the context of this document, the term "substantially" may be construed such that negligible residues and pollutions, respectively, may be encompassed which are not removable with acceptable effort anymore. These negligible residues and pollutions, respectively, are (intentionally) not desired in an embodiment, but cannot be removed with a reasonable effort anymore. For example, a medium with discharge quality may be substantially free from heavy metals, which may denote that negligible residues and pollutions, respectively (e.g. in the lower percent-, per mill-, or even ppm-range) may be present. The skilled person understands that, despite these residues and pollutions, respectively, are not desired, they can nevertheless not be separated in a manner with an acceptable technical effort.

In this document, the term "heavy metal" may in particular denote a metal which comprises a density larger than 5,0 g/cm³ (alternatively larger than 4,5 g/cm³). This includes e.g. copper, nickel, cobalt, gold, silver, palladium, tungsten, tin, zinc, iron, lead, chromium, rhodium, cadmium, etc. According to this definition silicon, sodium, potassium, calcium, magnesium, etc. are not denoted as heavy metal, for example. However, aluminum may be exceptionally considered as a heavy metal in this specific context, since the described method may be well suitable for aluminum.

In the context of this document, the term "foreign metal" may in particular denote a metal which is present in a metal-containing fluid (in a dissolved manner) but is not desired there (for certain applications). Depending on the application case, examples for such foreign metals (and their ions, respectively) may encompass: iron, lead, tin, molybdenum, nickel, cobalt, indium, cadmium, zinc, chromium, manganese, palladium.

In the context of this document, the term "circuit board and/or substrate manufacture" may in particular denote a process for manufacturing circuit boards and/or substrates, which is performed in an industrial plant, for example a circuit board factory. The term "circuit boards" may in particular relate to printed circuit boards (PCB), while the term "substrates" may e.g. relate to substrates for semiconductor chips, such as integrated circuits or organic interposers. A circuit board and/or substrate manufacture usually encompasses an etching process in which metal is removed by etching, such that desired metal structures are obtained, and a plating process in which metal is disposed by plating. A starting material for a circuit board and/or substrate manufacture encompasses substantially the metal and electrically isolating material, frequently an organic material, such as resin. The product of the process may be the finished circuit board and the substrate, respectively, or an intermediate product as well.

In this document, the term "etching process" may in particular denote a process of the circuit board and/or substrate manufacture which comprises etching metal, in particular copper, to thereby provide a desired metallic (electrically conductive) structure. According to an exemplary embodiment, this process may be performed as follows: a photoresist protects copper paths which shall not be etched away, while copper areas which shall be etched away are not covered with the photoresist. At first, for this purpose, the entire copper layer is coated with the photoresist. Then, through a mask, the photoresist is developed by UV-light. The mask passes UV-light only at positions, where the photoresist shall remain (i.e. where the desired conductor traces shall be provided). During developing, the resist (and the polymer, respectively) is cross-linking at the positions which have been exposed to UV-light. After developing, the photoresist which was not exposed (and not developed, respectively) can be easily washed away. Subsequently, the panel (and the component carrier preform, respectively) is etched. The photoresist protects the conductor traces, while the copper which is not covered with photoresist is etched/removed. When the etching process is finished, the photoresist is removed and peeled off, respectively (the resist is cross-linked and solid), and the conductor traces remain. The stripped photoresist can be precipitated at a later time by iron chloride.

According to an exemplary embodiment, the invention may be based on the idea that an efficient and robust membrane dialysis, in particular for acid-/metal-enriched wastewaters, may be provided, when the dialysis sections are connected in a row (one after the other, i.e. the flow goes through one section after the other) instead of in parallel (one besides the other, i.e. the flow goes through all sections at the same time) and are further separated by respective separation devices.

With the use of the separation device, the stability of the membrane device (stack) may be significantly enhanced, and the packing density (stacking of membranes and spacers) may be increased as well. More membranes (e.g. even in the range of one hundred or more) can be stacked, thereby reducing the overall amount of separate modules needed for treatment. As a result, the effective area of membranes, and thus performance, can be correspondingly increased compared to conventional membrane devices. Space requirements may be reduced, and the tightness of the membrane device (stack) may be increased.

In an example, the efficiency in acid and/or metal recycling is improved, so that material, purchase, transport, and wastewater treatment costs may be saved. Further, CO₂ emission may be decreased.

In particular, it has been surprisingly found that the separation devices may cause a turbulent flow that inhibits the formation of gas bubbles. Additionally or alternatively, a turbulent flow may transport the gas bubbles in an efficient manner out of the membrane dialysis device. By adapting the number of membrane and/or separation devices, the streaming velocity may be adjusted.

### Exemplary Embodiments

According to an embodiment, the first diffusion medium region is fluidically coupled with the second diffusion medium region, so that diffusion medium is streamed through the first diffusion medium region and then through second diffusion medium region. With the applied nomenclature, this example describes a current-mode in which the dialysis medium and the diffusion medium are streamed (in parallel) in the same direction.

According to an embodiment, the first diffusion medium region is fluidically coupled with the second diffusion medium region, so that the diffusion medium is streamed through the second diffusion medium region and then through first diffusion medium region. With the applied nomenclature, this example describes a counter-current mode, in which the dialysis medium and the diffusion medium are streamed (in parallel) in opposite directions. In an example, the freshest water is streamed against the most depleted dialysis medium.

According to an embodiment, the flow speed/velocity in the diffusion medium region may be same as in the dialysis medium region. Alternatively, the flow speeds may be different.

According to an embodiment, a flow rate in the range 0.05 to 50 l/min may be applied.

According to a further embodiment, the diffusion medium comprises water, in particular purified water. Thereby, an efficient diffusion gradient may be established, while a non-expansive diffusion medium is applied. In another example, an organic solvent may be applied as the diffusion medium.

According to a further embodiment, the dialysis medium comprises an acid- and metal-containing medium, in particular a wastewater from a component carrier manufacture. This may provide the advantage that the (high) acid content can be reduced, while the valuable metals are kept in solution. While on the one hand, an efficient recycling is provided, on the other hand, wastewater treatment and discarding costs can be saved.

According to a further embodiment, a dialysate medium comprises a metal-containing medium that is depleted of acid, in particular essentially free of acid. Such a dialysate medium may be fed back to the component carrier manufacture. For example, the dialysate medium may be further processed, e.g. by electrodialysis, to obtain the valuable metal as elementary metal, e.g. pure copper, that can be directly used for a plating process.

According to a further embodiment, a diffusate medium comprises an acid-containing medium, in particular a metal-free acid-containing medium (e.g. hydrochloric acid). In an example, the pH of the diffusate may be 5 or smaller, in particular 3 or smaller. Such a diffusate medium may be fed back to the component carrier manufacture, e.g. to an etching process as an acid. Further processing is also possible, e.g. by concentrating the acid.

According to a further embodiment, the membrane dialysis device is configured so that the dialysis medium and/or the diffusion medium is streamed as at least one of
i) a continuous one-way stream,
ii) an at least partially turbulent flow,
iii) so that gas bubbles are carried away.

It has been surprisingly found by the inventors that a turbulent flow (e.g. comprising a Reynolds Number > 3200, preferably > 4000) may be advantageously established to carry away gas bubbles that would otherwise hamper the process flow. An efficient measure to provide the turbulent flow may be a continuous one-way stream (in a row through the dialysis/diffusion medium regions), in particular in combination with the separation device(s).

Furthermore, in the described manner, separation rates may be improved, as the boundary layer becomes thinner and diffusion occurs faster. Due to a spacer between membrane and separation device (plate/baffle) turbulent flow occurs.

According to a further embodiment, the membrane dialysis device further comprising a dialysis input to input the dialysis medium, in particular wherein the dialysis input is coupled to the first dialysis medium region.

According to a further embodiment, the membrane dialysis device further comprising a dialysate output to output the dialysate medium, in particular wherein the dialysate output is coupled to the process-downstream dialysis medium region.

According to a further embodiment, the membrane dialysis device further comprising a diffusion (medium) input to input the diffusion medium, in particular wherein the diffusion input is coupled to the first diffusion medium region or the diffusion medium region that corresponds to the process-downstream dialysis medium region.

According to a further embodiment, the membrane dialysis device further comprising a diffusate output to output the diffusate medium, in particular wherein the diffusate output is coupled to the first diffusion medium region or the diffusion medium region that corresponds to the process-downstream dialysis medium region.

According to a further embodiment, the membrane dialysis device is configured so that, during operation of the membrane dialysis device,
the dialysis input and the diffusion input (e.g. purified water and feed) are arranged at the bottom.

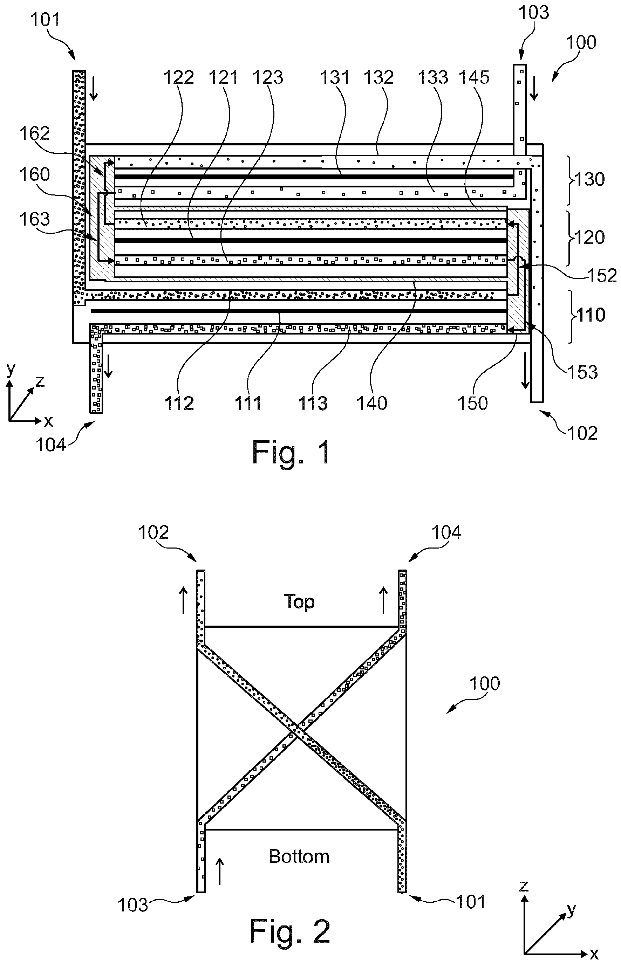

According to a further embodiment, the membrane dialysis device further comprising the dialysate output and the diffusate output are arranged at the top (see e.g. Figure 2). This may provide the advantage that the gas bubbles (in particular carried away by the turbulent flow) can be more easily removed, since they can directly flow up into the air. In comparison to a conventional device (see Figure 4), both outputs (dialysate and diffusate) are oriented towards the top to enable both efficient de-gassing.

According to a further embodiment, there may be performed a gas bubble removal step prior to the dialysis process, e.g. by using a vacuum. This may provide the advantage that the amount of gas bubbles (which may in particular form at diffusate medium region/side) is reduced.

According to a further embodiment, the membrane dialysis device further comprising a deflection device laterally delimiting the first dialysis section and/or the second dialysis section. This may provide the advantage that the membrane dialysis device is further stabilized. Instead of providing a separation device between the sections, the deflection device may separate the dialysis sections laterally from an environment. Thereby, stability, sealing, and packing density may be further improved.

Additionally or alternatively, the deflection device may (be configured to) create (further) turbulences in the flow (e.g. by a turbulence-promoting structure, for example a specific protrusion). This may provide the advantage of removing of gas bubbles, thereby enabling a more efficient dialysis process.

According to a further embodiment, the separation device and/or the deflection device is configured as a layer structure, in particular wherein the separation device and the deflection device are arranged perpendicular to each other. In a specific embodiment, the separation device and the deflection device are both configured as plate-shaped and are coupled (connected) in a right angle. Thereby, the separation device may protect the dialysis section between each other, while the deflection device may protect the dialysis device laterally.

According to a further embodiment, the deflection device comprises a dialysis medium channel that fluidically connects the first dialysis medium region with the second dialysis medium region.

According to a further embodiment, the deflection device comprises a diffusion medium channel that fluidically connects the first diffusion medium region with the second diffusion medium region.

This may provide the advantage that the deflection device is used as both, a protection and a channel. In an embodiment, the deflection device may be configured plate-shaped and the channel may be plate-shaped as well.

According to a further embodiment, the separation device and the deflection device are coupled, in particular connected, with each other. This measure may increase at least one of stability, packing density, sealing.

According to a further embodiment, the first membrane section and/or the second membrane section is configured according to at least one of the following: a dry membrane, a wet membrane, a plate membrane, a hollow membrane, a plurality of hollow membranes, a spiral membrane, a mesh-free membrane, a membrane with functionalized group, a cationic-selective membrane, an anionic-selective membrane, an anion exchange membrane, in particular wherein the first membrane section is different from the second membrane section.

A hollow membranes would mean a hollow module construction with wet or dry membranes. A mesh-free membrane may be seen as a membrane without a mesh applied to the membrane, so that the active surface area of the membrane increases (estimated to be about 5-15 %, depending on the structure of the mesh), which can additionally bring a price and process engineering advantage.

According to an embodiment, the membrane is not limited to metal cations. Also other cations like ammonium/phosphonium ions may selectively pass through the membrane.

According to a further embodiment, the membrane dialysis device further comprising: a third dialysis section having:
a) a third dialysis medium region,
b) a third diffusion medium region, and
c) a third membrane section arranged between the third dialysis medium region and the third diffusion medium region; and
d) a further separation device that spatially separates the second dialysis section from the third dialysis section.
The second dialysis medium region is fluidically coupled with the third dialysis medium region, so that the dialysis medium is streamed through the first dialysis medium region, then through second dialysis medium region, and afterwards through the third dialysis medium region (the same may hold true for the diffusion medium region).

According to a further embodiment, the separation device and the further separation device are oriented in parallel. This may provide the advantage that the membrane device can be stacked, in particular to a high density and high stability stack.

According to a further embodiment, the membrane dialysis device further comprising: a further deflection device, laterally delimiting the second dialysis section and/or the third dialysis section. This may provide the advantage that the membrane device (stack) may be well protected laterally, while density and stability may be increased.

According to a further embodiment, the deflection device and the further deflection device are arranged on opposite sides of the membrane dialysis device, more in particular essentially in parallel.

According to a further embodiment, the dialysis medium and the diffusion medium are streamed in counter current with respect to each other.

According to an exemplary embodiment, the process path within a plate acid dialysis is extended. Pressure-stable baffles (separation device) may not yield to the contact pressure of the outer pressure plates (deflection device) and may designed in such a way, that the entire sealing surface provided by the spacers (separation device) is effective. Further, the gas formed in the membrane stack may be continuously discharged, as the velocity of the water and the medium can be increased accordingly and thus the gas bubbles can be transported away. So, the membrane stack can be operated continuously and without interruption (up to 100% efficiency). The innovative design of plate dialysis also offers the possibility to create different separation zones (dialysis section) in the module. An individual zone can be created between each partition.

According to an exemplary embodiment, the following advantages may be achieved:
- separation rates have been improved compared to a standard model,
- water consumption is reduced and/or the acid/alkali concentration in the diffusate is increased,
- enrichment of acid/alkali concentration is enabled,
- constant operating parameters even with outgassing media (no backwashing necessary and less water consumption),
- self-monitoring of the system with possibility of adaptation to fluctuating feed streams,
- compact modular design of scaling simply designed, easy to retrofit.
- use dialysis to enrich instead of merely separating.

According to an embodiment, not only the loading speed (1-2 l/h per m²) membrane area, but also the overflow velocity may be important to create a turbulent flow and to improve the separation rate. Thereby, a laminar flow due to too slow flow rate results in a concentration gradient and a reduced separation performance of the plate may be avoided.

According to an embodiment, there can be performed an outgassing of dissolved gases in the ultrapure water (diffusion medium) by the pH change and thus the formation of "airpockets" in the module may be overcome.

According to an embodiment, separating plates increase the flow rate in the module and thus the possibility to carry gas bubbles along and discharge them from the module.

According to an embodiment, the orientation of the module outlets on the top allow gas to escape.

According to an embodiment, gas formation is suppressed by adjusting physical parameters, e.g. high pressure (for example 116 bar)/temperature setting (20-50°C, further 20-100°C).

According to an embodiment, balancing of flow limiters enables different flow rates without the need to adjust pumps.

According to an embodiment, switching between cross-flow and counter-current produces different separation results.

According to an embodiment, resource-saving and modular construction allows the connection of individual modules if feed streams fluctuate.

According to an embodiment, a control/regulation system is applied at an output, for example an optical inspection at diffusate output or a pH-measurement at dialysate output.

According to a further embodiment, at least one membranes may be exchanged and or recycled. This may be a quick and efficient way in order to ensure high quality/through-put process.

According to a further embodiment, different membrane sections may comprise different membranes. For example, in the first dialysis section, a "heavy duty" membrane may be used, while in the last dialysis section, a purifying membrane may be applied.

According to a further embodiment, the separation device comprises a flow structure that is configured to promote a turbulent flow. This may provide the advantage that the above described positive effects of the turbulent flow may be enhanced. For example, the separation device may comprise protrusions, e.g. shaped as a rake or tooth, that extend into a respective medium region.

In an embodiment, the component carrier is configured as one of the group consisting of a printed circuit board, a substrate (in particular an IC substrate), and an interposer.

In an embodiment, the component carrier is shaped as a plate. This contributes to the compact design, wherein the component carrier nevertheless provides a large basis for mounting components thereon. Furthermore, in particular a naked die as example for an embedded electronic component, can be conveniently embedded, thanks to its small thickness, into a thin plate such as a printed circuit board.

In an embodiment, the component carrier stack comprises at least one electrically insulating layer structure and at least one electrically conductive layer structure. For example, the component carrier may be a laminate of the mentioned electrically insulating layer structure(s) and electrically conductive layer structure(s), in particular formed by applying mechanical pressure and/or thermal energy. The mentioned stack may provide a plate-shaped component carrier capable of providing a large mounting surface for further components and being nevertheless very thin and compact.

In the context of the present application, the term "printed circuit board" (PCB) may particularly denote a plate-shaped component carrier which is formed by laminating several electrically conductive layer structures with several electrically insulating layer structures, for instance by applying pressure and/or by the supply of thermal energy. As preferred materials for PCB technology, the electrically conductive layer structures are made of copper, whereas the electrically insulating layer structures may comprise resin and/or glass fibers, so-called prepreg or FR4 material. The various electrically conductive layer structures may be connected to one another in a desired way by forming holes through the laminate, for instance by laser drilling or mechanical drilling, and by partially or fully filling them with electrically conductive material (in particular copper), thereby forming vias or any other through-hole connections. The filled hole either connects the whole stack, (through-hole connections extending through several layers or the entire stack), or the filled hole connects at least two electrically conductive layers, called via. Similarly, optical interconnections can be formed through individual layers of the stack in order to receive an electro-optical circuit board (EOCB). Apart from one or more components which may be embedded in a printed circuit board, a printed circuit board is usually configured for accommodating one or more components on one or both opposing surfaces of the plate-shaped printed circuit board. They may be connected to the respective main surface by soldering. A dielectric part of a PCB may be composed of resin with reinforcing fibers (such as glass fibers).

In the context of the present application, the term "substrate" may particularly denote a small component carrier. A substrate may be a, in relation to a PCB, comparably small component carrier onto which one or more components may be mounted and that may act as a connection medium between one or more chip(s) and a further PCB. For instance, a substrate may have substantially the same size as a component (in particular an electronic component) to be mounted thereon (for instance in case of a Chip Scale Package (CSP)). In another embodiment, the substrate may be substantially larger than the assigned component (for instance in a flip chip ball grid array, FCBGA, configuration). More specifically, a substrate can be understood as a carrier for electrical connections or electrical networks as well as component carrier comparable to a printed circuit board (PCB), however with a considerably higher density of laterally and/or vertically arranged connections. Lateral connections are for example conductive paths, whereas vertical connections may be for example drill holes. These lateral and/or vertical connections are arranged within the substrate and can be used to provide electrical, thermal and/or mechanical connections of housed components or unhoused components (such as bare dies), particularly of IC chips, with a printed circuit board or intermediate printed circuit board. Thus, the term "substrate" also includes "IC substrates". A dielectric part of a substrate may be composed of resin with reinforcing particles (such as reinforcing spheres, in particular glass spheres).

The substrate or interposer may comprise or consist of at least a layer of glass, silicon (Si) and/or a photoimageable or dry-etchable organic material like epoxy-based build-up material (such as epoxy-based build-up film) or polymer compounds (which may or may not include photo- and/or thermosensitive molecules) like polyimide or polybenzoxazole.

In an embodiment, the at least one electrically insulating layer structure comprises at least one of the group consisting of a resin or a polymer, such as epoxy resin, cyanate ester resin, benzocyclobutene resin, bismaleimide-triazine resin, polyphenylene derivate (e.g. based on polyphenylenether, PPE), polyimide (PI), polyamide (PA), liquid crystal polymer (LCP), polytetrafluoroethylene (PTFE) and/or a combination thereof. Reinforcing structures such as webs, fibers, spheres or other kinds of filler particles, for example made of glass (multilayer glass) in order to form a composite, could be used as well. A semi-cured resin in combination with a reinforcing agent, e.g. fibers impregnated with the above-mentioned resins is called prepreg. These prepregs are often named after their properties e.g. FR4 or FR5, which describe their flame retardant properties. Although prepreg particularly FR4 are usually preferred for rigid PCBs, other materials, in particular epoxy-based build-up materials (such as build-up films) or photoimageable dielectric materials, may be used as well. For high frequency applications, high-frequency materials such as polytetrafluoroethylene, liquid crystal polymer and/or cyanate ester resins, may be preferred. Besides these polymers, low temperature cofired ceramics (LTCC) or other low, very low or ultra-low DK materials may be applied in the component carrier as electrically insulating structures.

In an embodiment, the at least one electrically conductive layer structure comprises at least one of the group consisting of copper, aluminum, nickel, silver, gold, palladium, tungsten, magnesium, carbon, (in particular doped) silicon, titanium, and platinum. Although copper is usually preferred, other materials or coated versions thereof are possible as well, in particular coated with supra-conductive material or conductive polymers, such as graphene or poly(3,4-ethylenedioxythiophene) (PEDOT), respectively.

At least one further component may be embedded in and/or surface mounted on the stack. The component and/or the at least one further component can be selected from a group consisting of an electrically non-conductive inlay, an electrically conductive inlay (such as a metal inlay, preferably comprising copper or aluminum), a heat transfer unit (for example a heat pipe), a light guiding element (for example an optical waveguide or a light conductor connection), an electronic component, or combinations thereof. An inlay can be for instance a metal block, with or without an insulating material coating (IMS-inlay), which could be either embedded or surface mounted for the purpose of facilitating heat dissipation. Suitable materials are defined according to their thermal conductivity, which should be at least 2 W/mK. Such materials are often based, but not limited to metals, metal-oxides and/or ceramics as for instance copper, aluminium oxide (Al₂O₃) or aluminum nitride (AIN). In order to increase the heat exchange capacity, other geometries with increased surface area are frequently used as well. Furthermore, a component can be an active electronic component (having at least one p-n-junction implemented), a passive electronic component such as a resistor, an inductance, or capacitor, an electronic chip, a storage device (for instance a DRAM or another data memory), a filter, an integrated circuit (such as field-programmable gate array (FPGA), programmable array logic (PAL), generic array logic (GAL) and complex programmable logic devices (CPLDs)), a signal processing component, a power management component (such as a field-effect transistor (FET), metal-oxide-semiconductor field-effect transistor (MOSFET), complementary metal-oxide-semiconductor (CMOS), junction field-effect transistor (JFET), or insulated-gate field-effect transistor (IGFET), all based on semiconductor materials such as silicon carbide (SiC), gallium arsenide (GaAs), gallium nitride (GaN), gallium oxide (Ga₂O₃), indium gallium arsenide (InGaAs), indium phosphide (InP) and/or any other suitable inorganic compound), an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit. However, other components may be embedded in the component carrier. For example, a magnetic element can be used as a component. Such a magnetic element may be a permanent magnetic element (such as a ferromagnetic element, an antiferromagnetic element, a multiferroic element or a ferrimagnetic element, for instance a ferrite core) or may be a paramagnetic element. However, the component may also be a IC substrate, an interposer or a further component carrier, for example in a board-in-board configuration. The component may be surface mounted on the component carrier and/or may be embedded in an interior thereof. Moreover, also other components, in particular those which generate and emit electromagnetic radiation and/or are sensitive with regard to electromagnetic radiation propagating from an environment, may be used as component.

In an embodiment, the component carrier is a laminate-type component carrier. In such an embodiment, the component carrier is a compound of multiple layer structures which are stacked and connected together by applying a pressing force and/or heat.

After processing interior layer structures of the component carrier, it is possible to cover (in particular by lamination) one or both opposing main surfaces of the processed layer structures symmetrically or asymmetrically with one or more further electrically insulating layer structures and/or electrically conductive layer structures. In other words, a build-up may be continued until a desired number of layers is obtained.

After having completed formation of a stack of electrically insulating layer structures and electrically conductive layer structures, it is possible to proceed with a surface treatment of the obtained layers structures or component carrier.

In particular, an electrically insulating solder resist may be applied to one or both opposing main surfaces of the layer stack or component carrier in terms of surface treatment. For instance, it is possible to form such a solder resist on an entire main surface and to subsequently pattern the layer of solder resist so as to expose one or more electrically conductive surface portions which shall be used for electrically coupling the component carrier to an electronic periphery. The surface portions of the component carrier remaining covered with solder resist may be efficiently protected against oxidation or corrosion, in particular surface portions containing copper.

It is also possible to apply a surface finish selectively to exposed electrically conductive surface portions of the component carrier in terms of surface treatment. Such a surface finish may be an electrically conductive cover material on exposed electrically conductive layer structures (such as pads, conductive tracks, etc., in particular comprising or consisting of copper) on a surface of a component carrier. If such exposed electrically conductive layer structures are left unprotected, then the exposed electrically conductive component carrier material (in particular copper) might oxidize, making the component carrier less reliable. A surface finish may then be formed for instance as an interface between a surface mounted component and the component carrier. The surface finish has the function to protect the exposed electrically conductive layer structures (in particular copper circuitry) and enable a joining process with one or more components, for instance by soldering. Examples for appropriate materials for a surface finish are Organic Solderability Preservative (OSP), Electroless Nickel Immersion Gold (ENIG), Electroless Nickel Immersion Palladium Immersion Gold (ENIPIG), Electroless Nickel Electroless Palladium Immersion Gold (ENEPIG), gold (in particular hard gold), chemical tin (chemical and electroplated), nickel-gold, nickel-palladium, etc. Also nickel-free materials for a surface finish may be used, in particular for high-speed applications. Examples are ISIG (Immersion Silver Immersion Gold), and EPAG (Electroless Palladium Autocatalytic Gold).

The aspects defined above and further aspects of the invention are apparent from the examples of embodiment to be described hereinafter and are explained with reference to these examples of embodiment.

### Brief Description of the Drawings

Figure 1 shows a top view on a membrane dialysis device according to an exemplary embodiment of the invention.
Figure 2 shows a simplified side view on the membrane dialysis device according to an exemplary embodiment of the invention.
Figure 3 shows a top view on a conventional membrane dialysis.
Figure 4 shows a side view on a conventional membrane dialysis.
Figure 5 shows a schematic view of membrane dialysis system according to an exemplary embodiment of the invention.

The illustrations in the drawings are schematic. In different drawings, similar or identical elements are provided with the same reference signs.

### Detailed Description of the Drawings

**Figure 1** shows a top view (along the Z-axis) on a membrane (acid) dialysis device 100 according to an exemplary embodiment of the invention. The membrane dialysis device 100 comprises in this schematic example three membrane sections 110, 120, 130 for performing a respective dialysis process. In other preferred embodiments, six or more membrane sections can be applied. In contrary to the conventional example described for Figure 3 above, said dialysis processes are not performed at the same time (in parallel) but instead one after the other (in a row).

The membrane dialysis device 100 comprises two inputs: a dialysis (medium) input to input a dialysis medium 101 and a diffusion (medium) input to input the diffusion medium 103. Accordingly, the membrane dialysis device 100 comprises as well two outputs: a dialysate output to output the dialysate medium 102 and a diffusate output to output the diffusate medium 104.

In the exemplary example described here, the diffusion medium 103 provided at the diffusion input comprises purified water, while the dialysis medium 101 provided at the dialysis input comprises an acid- and metal-(salt)-containing medium that is a wastewater from a component carrier manufacture (e.g. an etching process).

Accordingly, the dialysate medium 102 yielded at the dialysate output comprises a metal-containing medium that is depleted of acid, preferably essentially free of acid, while the diffusate medium 104 obtained at the diffusion output comprises an acid-containing medium that is yet metal-free.

The membrane dialysis device 100 is separated in three sections 110, 120, 130, each of which comprises one of the membrane sections 111, 121, 131, a dialysis medium region 112, 122, 132, and a diffusion medium region 113, 123, 133. In each section 110, 120, 130, the respective membrane section 111, 121, 131 is sandwiched between the respective dialysis medium region 112, 122, 132, and the respective diffusion medium region 113, 123, 133.

Two different operation modi are possible for device 100, being current or counter-current. In the first mode, the first diffusion medium region 113 is fluidically coupled with the second diffusion medium region 123 (the same holds true for the second diffusion medium region 123 and the third diffusion medium region 133), that the diffusion medium 103 is streamed through the first diffusion medium region 113 and then through second diffusion medium region 123. In other words, the fresh diffusion medium 103 is used in the first dialysis process. In the second mode, the diffusion medium 103 is streamed through the second diffusion medium region 123 and then through first diffusion medium region 113 (and through the third diffusion region 133 before the second diffusion region 123). In other words, the acid-enriched diffusion medium 103 is used in the first dialysis process. As can be seen in the Figure 1, the second mode, i.e. countercurrent, is applied. Dialysis medium 101 and diffusion medium 103 are thus streamed in opposite directions with respect to each other.

The dialysis input 101 is coupled to the first dialysis medium region 112 and the dialysate output 102 is coupled to the process-downstream dialysis medium region being here the third dialysis medium region 132. The diffusion input 103 is coupled to the diffusion medium region 133 that corresponds to the process-downstream dialysis medium region, being here the third diffusion medium region 132, while the diffusate output 104 is coupled to the first diffusion medium region 113 that corresponds to the process-upstream dialysis medium region.

In comparison to the conventional example of Figure 3, the membrane dialysis device 100 further comprises a separation device 140 that spatially separate the first dialysis section 110 (with the first dialysis medium region 112, the first diffusion medium region 113, and the first membrane section 111) from the second dialysis section 120 (with the second dialysis medium region 122, the second diffusion medium region 123, and the second membrane section 121). In a similar manner, a further separation device 145 separates the second dialysis section 120 from the third dialysis section 130. In the example shown, the separation devices 140, 145 are arranged between the dialysis sections 110, 120, 130 in parallel with the membrane sections 111, 121, 131.

The first dialysis medium region 112 is hereby fluidically coupled with the second dialysis medium region 122, so that dialysis medium 101 is streamed through the first dialysis medium region 112 and then through second dialysis medium region 122, and then through the third dialysis medium region 132.

The membrane dialysis device 100 further comprises a deflection device 150 that laterally delimits the first dialysis section 110 and the second dialysis section 120. A further deflection device 160 laterally delimits the second dialysis section 120 and the third dialysis section 130. The deflection device 150 and the further deflection device 160 are arranged on opposite sides of the membrane dialysis device 100 and in parallel with each other.

The separation devices 140, 145 and the deflection devices 150, 160 are configured here as layer structures, which are arranged perpendicular to each other and which are connected.

The deflection device 150 comprises a dialysis medium channel 152 that fluidically connects the first dialysis medium region 112 with the second dialysis medium region 122 to enable a continuous one-way flow. Accordingly, the deflection device 150 comprises a diffusion medium channel 153 that fluidically connects the first diffusion medium region 113 with the second diffusion medium region 123. A corresponding further dialysis medium channel 162 and a further diffusion medium channel 163 can be found in the further deflection device 160.

The described architecture of the membrane dialysis device 100 enables a stream of dialysis medium 101 and diffusion medium 103 that is a continuous one-way stream (in a row through the dialysis sections) and that is at least partially a turbulent flow. Preferably, the turbulent flow carries away (air) bubbles form the membrane dialysis device 100 that would otherwise hamper the functionality.

**Figure 2** shows a simplified side view (along the Y-axis) on the membrane dialysis device 100 according to an exemplary embodiment of the invention. The membrane dialysis device 100 can be the same as the one described for Figure 1 above. The membrane dialysis device 100 is arranged in its operation environment (and is in operation mode), whereby the dialysis input 101 and the diffusion input 103 are arranged at the bottom. Additionally, the dialysate output 102 and the diffusate output 104 are arranged at the top.

This arrangement is in contrast to the conventional example shown in Figure 4, wherein at the top and at the bottom, respectively an input and an output is arranged. Nevertheless, the architecture of Figure 2 is chosen on purpose, in particular to easily remove gas bubbles (carried away by the turbulent flow) more easily (by letting them escape directly into the air).

As it is shown in Figure 1, the membrane dialysis device comprises also a plurality of stacked layers in stack thickness direction, so that the stream of diffusion medium and diffusate medium is meandering through the layers. Please note that this architecture is not shown in detail in Figure 2, but would be present in an embodiment.

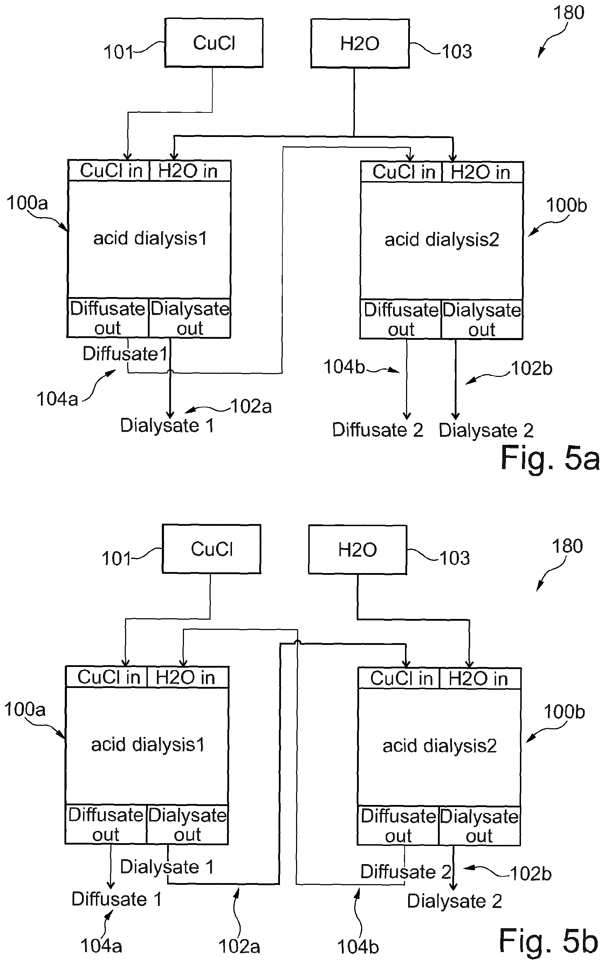

**Figures 5a and 5b** show a schematic view of a membrane dialysis system 180 according to exemplary embodiments of the invention. In this context, the term "membrane dialysis system" may in particular refer to an arrangement of two or more membrane dialysis devices 100 as described above. As shown in the present embodiment, these membrane dialysis devices 100 are preferably coupled fluidically. The system 180 comprises in these examples two membrane dialysis devices 100a, 100b, for example devices 100 as described for Figures 1 and 2 above, to which the diffusion medium 103 (preferably purified water) supply is connected in parallel (Figure 5a) and in series (Figure 5b).

Figure 5a: purified (de-salted) water is provided as the diffusion medium 103 to the respective diffusion (medium) inputs of the membrane dialysis devices 100a, 100b. The dialysate input 101 to the first membrane dialysis device 100a is in this example a highly acidic metal salt-containing medium from a component carrier etching process. At the dialysate output of the first membrane dialysis device 100a, an acid-free metal-salt-containing medium 102a is yielded. The second membrane dialysis device 100b functions in the same manner but uses the diffusate output 104a of the first membrane dialysis device 100a as the dialysis medium input.

The diffusate medium 104a can comprises a concentration (which is lower than that of the dialysate medium 102a) of the metal (e.g. copper). This is due to the fact that still some of the cations may pass the membrane, in particular when the cations form a complex and an aggregate, respectively (e.g. a copper-chlorine complex). Without wishing to be bound to any specific theory, it is presently assumed that such an aggregate formation may take place when the concentration of the cations in a solution is increased.

The described configuration can be used for example, when the metal of the dialysis medium 101 should be recycled. Then, a second membrane dialysis step can be applied to remove the acid from the diffusate and thereby obtain a second dialysate 102b with a potentially interesting metal concentration.

Figure 5b: this embodiment is very similar to the one described for Figure 5a. The difference being that the diffusion medium 103 supply is connected to the diffusion medium input 103 of the second membrane dialysis device 100b. The input to the diffusion medium input 103 of the first membrane dialysis device 100a is in this case the second diffusate medium 104b from the second membrane dialysis device 100b. Further, the first dialysate 102a first membrane dialysis device 100a is the input to the dialysis medium input of the second membrane dialysis device 100b.

In this example, the amount of needed diffusion medium 103 can be reduced (e.g. cut into half if the streams of example Fig. 5a have the same size), thereby yielding a higher concentrated acid, in particular HCI, containing diffusate medium. A preferred use can be to enhance the velocity of both streams (diffusion medium 103 and dialysis medium 101) to create a turbulent flow behavior. Further, by including a plurality of valves, there may be an easy switch between parallel and series process (not shown).

### Reference signs

- 100: Membrane dialysis
- 100a: First membrane dialysis
- 100b: Second membrane dialysis
- 101: Dialysis medium (input)
- 102: Dialysate (output)
- 102a: First dialysate
- 102b: Second dialysate
- 103: Diffusion medium (input)
- 104: Diffusate (output)
- 104a: First diffusate
- 104b: Second diffusate
- 110: First dialysis section
- 111: First membrane section
- 112: First dialysis medium region
- 113: First diffusion medium region
- 120: Second dialysis section
- 121: Second membrane section
- 122: Second dialysis medium region
- 123: Second diffusion medium region
- 130: Third dialysis section
- 131: Third membrane section
- 132: Third dialysis medium region
- 133: Third diffusion medium region
- 140: Separation device
- 145: Further separation device
- 150: Deflection device
- 152: Dialysis medium channel
- 153: Diffusion medium channel
- 160: Further deflection device
- 162: Further dialysis medium channel
- 163: Further diffusion medium channel
- 180: Membrane dialysis arrangement

### Prior art

- 200: Membrane dialysis
- 201: Dialysis input
- 202: Dialysate output
- 203: Diffusion input
- 204: Diffusate output
- 212a-212c: Dialysis region
- 213a-213c: Diffusion region
- 215a-215e: Membranes

## Claims

1. A membrane dialysis device (100), comprising:
a first dialysis section (110) having:
a first dialysis medium region (112),
a first diffusion medium region (113), and
a first membrane section (111) arranged between the first dialysis medium region (112) and the first diffusion medium region (113);
a second dialysis section (120) having:
a second dialysis medium region (122),
a second diffusion medium region (123), and
a second membrane section (121) arranged between the first dialysis medium region (122) and the second diffusion medium region (123); and
a separation device (140) that spatially separates the first dialysis section (110) from the second dialysis section (120);
wherein the first dialysis medium region (112) is fluidically coupled with the second dialysis medium region (122), so that dialysis medium (101) is streamed through the first dialysis medium region (112) and then through the second dialysis medium region (122).

2. The membrane dialysis device (100) according to claim 1,
wherein the first diffusion medium region (113) is fluidically coupled with the second diffusion medium region (123),
so that diffusion medium (103) is streamed through the first diffusion medium region (113) and then through second diffusion medium region (123), or
so that the diffusion medium (103) is streamed through the second diffusion medium region (123) and then through first diffusion medium region (113).

3. The membrane dialysis device (100) according to any one of the preceding claims,
wherein the diffusion medium (103) comprises water, in particular purified water; and/or
wherein the dialysis medium (101) comprises an acid- and metal-containing medium, in particular a wastewater from a component carrier manufacture.

4. The membrane dialysis device (100) according to any one of the preceding claims,
wherein a dialysate medium (102) comprises a metal-containing medium that is depleted of acid, in particular essentially free of acid; and/or
wherein a diffusate medium (104) comprises an acid-containing medium, in particular a metal-free acid-containing medium.

5. The membrane dialysis device (100) according to any one of the preceding claims, configured so that the dialysis medium (101) and/or the diffusion medium (103) is streamed
as a continuous one-way stream; and/or
as an at least partially turbulent flow; and/or
so that gas bubbles are carried away.

6. The membrane dialysis device (100) according to any one of the preceding claims, further comprising at least one of:
a dialysis input to input the dialysis medium (101), in particular wherein the dialysis input is coupled to the first dialysis medium region (112);
a dialysate output to output the dialysate medium (102), in particular wherein the dialysate output is coupled to the process-downstream dialysis medium region (122, 132);
a diffusion input to input the diffusion medium (103), in particular wherein the diffusion input is coupled to the first diffusion medium region (113) or the diffusion medium region (123, 133) that corresponds to the process-downstream dialysis medium region (122, 132);
a diffusate output to output the diffusate medium (104), in particular wherein the diffusate output is coupled to the first diffusion medium region (113) or the diffusion medium region (123, 133) that corresponds to the process-downstream dialysis medium region (122, 132).

7. The membrane dialysis device (100) according to claim 6, configured so
that, during operation of the membrane dialysis device (100),
the dialysis input (101) and the diffusion input (103) are arranged at the bottom; and/or
the dialysate output (102) and the diffusate output (104) are arranged at the top.

8. The membrane dialysis device (100) according to any one of the preceding claims, further comprising:
a deflection device (150) laterally delimiting the first dialysis section (110) and/or the second dialysis section (120).

9. The membrane dialysis device (100) according to claim 8,
wherein the deflection device (150) comprises a dialysis medium channel (152) that fluidically connects the first dialysis medium region (112) with the second dialysis medium region (122); and/or
wherein the deflection device (150) comprises a diffusion medium channel (153) that fluidically connects the first diffusion medium region (113) with the second diffusion medium region (123).

10. The membrane dialysis device (100) according to claim 8 or 9,
wherein the separation device (140) and the deflection device (150) are coupled, in particular connected, with each other.

11. The membrane dialysis device (100) according to any one of the preceding claims,
wherein the first membrane section (111) and/or the second membrane section (121) is configured according to at least one of the following: a dry membrane, a wet membrane, a plate membrane, a hollow membrane, a plurality of hollow membranes, a spiral membrane, a mesh-free membrane, a membrane with functionalized group, a cationic-selective membrane, an anionic-selective membrane, an anion exchange membrane,
in particular wherein the first membrane section (111) is different from the second membrane section (121).

12. The membrane dialysis device (100) according to any one of the preceding claims, further comprising:
a third dialysis section (130) having:
a third dialysis medium region (132),
a third diffusion medium region (133), and
a third membrane section (131) arranged between the third dialysis medium region (132) and the third diffusion medium region (133); and
a further separation device (145) that spatially separates the second dialysis section (120) from the third dialysis section (130);
wherein the second dialysis medium region (122) is fluidically coupled with the third dialysis medium region (132), so that the dialysis medium (101) is streamed through the first dialysis medium region (112), then through second dialysis medium region (122), and afterwards through the third dialysis medium region (132).

13. The membrane dialysis device (100) according to claim 12, further comprising:
a further deflection device (160), laterally delimiting the second dialysis section (120) and/or the third dialysis section (130),
in particular wherein the deflection device (150) and the further deflection device (160) are arranged on opposite sides of the membrane dialysis device (100), more in particular essentially in parallel.

14. A method of processing a dialysis medium (101), in particular a waste fluid from the component carrier manufacture, the method comprising:
streaming, in a first dialysis section (110), a dialysis medium (101) through a first dialysis medium region (112), that is separated with a first membrane section (111) from a first diffusion medium region (113); and afterwards,
streaming, in a spatially separated second dialysis section (120), the dialysis medium (101) through a second dialysis medium region (122), being fluidically connected with the first dialysis region (112), wherein the second dialysis medium region (122) is separated with a second membrane section (121) from a second diffusion medium region (123).

15. Using separation plates (140, 145) between membrane-containing sections (110, 120) of a membrane dialysis device (100), in particular with six or more membranes, to enable a turbulent flow of an acid- and metal-containing medium (101) through the membrane dialysis device (100).
